# EUROPEAN PATENT SPECIFICATION

(11) **EP 4 505 074 B1**
(45) Date of publication and mention of the grant of the patent: **24.06.2026**
(21) Application number: 23718321.5
(22) Date of filing: 06.04.2023
(51) Int. Cl.: F04D 15/00, F04D 19/04, F04D 27/00

(54) **PUMP CONTROL METHOD AND APPARATUS**
VERFAHREN UND VORRICHTUNG ZUR PUMPENSTEUERUNG
PROCÉDÉ ET APPAREIL DE COMMANDE DE POMPE

(30) Priority: 07.04.2022 GB 202205119
(43) Date of publication of application: 12.02.2025
(73) Proprietor: Edwards Limited, Burgess Hill, Sussex RH15 9TW (GB)
(72) Inventor: HARKIN, Richard Lee, Burgess Hill, Sussex RH15 9TW (GB); MBIANJI, Cedric Stephane Ngana, Eastbourne, Sussex BN22 9BA (GB); GREVEN, Alois, 50968 Cologne (DE); HAYLOCK, James Alexander, Burgess Hill, Sussex RH15 9TW (GB); LI, Jian, Eastbourne, Sussex BN22 9BA (GB)
(74) Representative: Arnold, Emily Anne
(86) International application number: PCT/GB2023/050918
(87) International publication number: WO 2023/194735

(56) References cited:
- EP-A1- 3 620 660
- EP-A2- 1 767 790
- JP-A- 2004 132 179
- JP-A- H10 122 182

## Description

### TECHNICAL FIELD

The present disclosure relates to a pump control method and apparatus. Aspects of the invention relate to a pump control unit, a pump system, a pump apparatus and a method of controlling a pump.

### BACKGROUND

A pump for pumping process gases, such as a turbo molecular pump (TMP), may be used in harsh operating environments. For example, the pump may be exposed to high levels of ionising radiation requiring the use of suitably robust materials. In view of the harsh operating environment, it has been recognised that it would be advantageous to utilise a pump controller that is remote from the pump system. The pump controller may be disposed in a benign environment which is not exposed to the high levels of ionising radiation. The active electronics within the pump controller, such as microcontrollers and silicon based integrated circuits, may be protected from damage due to exposure to the ionising radiation that may otherwise result in life. The connection between the remote turbo molecular pump and the associated pump controller may consist of a power connection and a signal loom. The power and the signal may be combined in certain application.

A standard turbo molecular pump typically provides integrated control electronics within the pump system itself. Functional safety elements are provided by the electronics designed specifically for the pump system. As a result, there is no risk of mismatching the functional safety components with the wrong pump system as the mechanical integration of the Pump Controller within the pump system prevents any mismatch.

The arrangement in which the pump controller is disposed distal from the pump, for example over a large physical distance (e.g. up to 200m), can present particular technical challenges. In particular, maintain functional safety for the pump may be problematic. In the case of a high speed pump system, such as a turbo molecular pump, a particular problem is running the turbo molecular pump above its rated speed. This may lead to a mechanical failure, potentially resulting in a failed vacuum seal or a mechanical failure. These problems may be compounded if the pump controller is configured to control a plurality of different pumps.

It is an aim of the present invention to address one or more of the disadvantages associated with the prior art.

EP 1767790 A2 describes a prior art pump system comprising a pump and a pump control unit, wherein the pump comprises a pump type identifier.

### SUMMARY OF THE INVENTION

Aspects and embodiments of the invention provide a pump control unit, a pump system, a pump apparatus and a method of controlling a pump as claimed in the appended claims
According to an aspect of the present invention there is provided a pump control unit for controlling a pump, the pump comprising a pump drive motor, a pump type identifier for identifying a pump type, and a pump speed rating identifier for identifying a pump speed rating; wherein the pump control unit comprises:
at least one controller configured to control an inverter for powering the pump drive motor;
a pump type identification circuit configured to communicate with the pump type identifier to identify the pump type, the pump type identification circuit being configured to output a pump type identification signal for identifying the pump type;
a pump speed rating identification circuit configured to communicate with the pump speed rating identifier to identify the pump speed rating, the pump speed rating identification circuit being configured to output a pump speed rating identification signal for identifying the pump speed rating; and
a cross-check circuit for receiving the pump type identification signal and the pump speed rating identification signal and identifying a mismatch between the identified pump type and the identified pump speed rating. At least in certain embodiments, the cross-check circuit is configured to output a mismatch signal to inhibit operation of the pump in dependence on identification of the mismatch.

At least in certain embodiments, the pump control unit may provide a multi-level hardware detection scheme to identify a remote pump system prior to operation. The detection scheme may optionally be configured to implement an over-speed protection system to help avoid operation of the pump at speed greater than the speed rating. This may provide an improved functional safety element for the overall pump system.

The pump control unit may be capable of identifying specific variants of pump system. The identified variant may be cross-checked against a secondary pump speed rating identification signal. The pump control unit may thereby ensure that the identified pump type and the identified pump speed rating match. At least in certain embodiments, the pump control unit may be configured to enable operation of the pump in dependence on identification of a match between the identified pump type and the identified pump speed rating.

The pump type identification circuit and the pump speed rating identification circuit may be implemented as two dedicated hardware detection circuits. The pump identification and the pump speed rating may be identified via two signals, for example first and second analogue voltage signals. The two signals may be used by the cross-checking circuit to verify that a valid pump system has been detected. The primary functional safety element may be achieved exclusively by hardware electronics to achieve a high protection level (PL).

The pump control unit may implement supplementary checks on the pump type identification signal and the pump speed rating signa, for example via embedded firmware. These checks may enable diagnostics and/or supplementary protection. For example, the operation of the pump may be inhibited in dependence on detection of a mismatch by the firmware. The firmware check may be supplementary to the hardware check described herein.

At least in certain embodiments, the pump control unit may provide one or more of the following benefits:
- A hardware-based solution that provides redundancy to achieve improved reliability, therefore enabling a high protection level (PL) rating.
- A hardware-based solution which provides a well-defined platform to assess the design for reliability for functional safety.
- A cost-effective solution which enables pump systems to be categorised by their speed range, therefore reducing the complexity and component count of the design.

The cross-check circuit may be configured to output the mismatch signal to a trip latch circuit for inhibiting operation of the pump. At least in certain embodiments, the trip latch circuit may be configured to inhibit operation of the inverter.

The pump type identification circuit may be configured to output a first current to the pump type identification circuit and to measure a pump type identification voltage. The pump type identification circuit may be configured to identify the pump type in dependence on the measured pump type identification voltage.

The pump speed rating identification circuit may be configured to output a second current to the pump speed rating identification circuit and to measure a pump speed rating identification voltage. The pump speed rating identification circuit may be configured to identify the pump speed rating in dependence on the measured pump speed rating identification voltage.

The cross-check circuit may be configured to identify the mismatch in dependence on a determination that the measured pump type identification voltage and the measured pump speed rating identification voltage are different from each other. The cross-check circuit may be configured to identify the mismatch in dependence on a determination that the relationship between the measured pump type identification voltage and the measured pump speed rating identification voltage is outside a predetermined range.

The at least one controller may be configured to receive the pump type identification signal and the pump speed rating identification signal.

The at least one controller may be configured to perform a secondary check to identify a mismatch between the identified pump type and the identified pump speed rating in dependence on the pump type identification signal and the pump speed rating identification signal.

The or each controller comprises at least one electronic processor and a memory device. A set of computational instructions may be stored in the memory device. When executed by the at least one electronic processor, the computational instructions cause the at least one electronic processor to implement the method(s) described herein. In particular, the computational instructions cause the at least one electronic processor to identify the second mismatch.

The at least one controller may be configured to inhibit operation of the pump in dependence on identification of the mismatch.

The at least one controller may be configured to control an operating speed of the pump in dependence on the identified pump speed rating.

The pump control unit may comprise an over-speed detection unit. The over-speed detection unit may be configured in dependence on the pump speed rating identification signal.

According to a further aspect of the present invention there is provided a pump system comprising pump control unit as described herein. The pump system may comprise a pump apparatus.

According to a further aspect of the present invention there is provided a pump apparatus comprising:
a pump drive motor;
a pump type identifier for identifying a pump type; and
a pump speed rating identifier for identifying a pump speed rating;
wherein the pump type identifier and the pump speed rating identifier are operable independently of each other to identify the pump type and the pump speed rating respectively.

The pump type identifier may comprise a pump type resistor network for establishing a pump type identification voltage in dependence on the supply of a first current.

The pump speed rating identifier may comprise a speed rating resistor network for establishing a pump speed rating identification voltage in dependence on the supply of a second current.

According to a further aspect of the present invention there is provided a pump control unit for controlling operation of a pump comprising a pump drive motor, a pump type identifier and a pump speed rating identifier; wherein the pump controller is configured to:
communicate with the pump type identifier to determine a pump type;
communicate with the pump speed rating identifier to determine a pump speed rating;
cross-check the determined pump type and the determined pump speed rating; and
inhibit operation of the pump in dependence on identification of a mismatch between the determined pump type and the determined pump speed rating. The pump controller may be configured to enable operation of the pump in dependence on identification of a match between the determined pump type and the determined pump speed rating.

According to a further aspect of the present invention there is provided a method of controlling a pump comprising a pump drive motor, a pump type identifier and a pump speed rating identifier; wherein the method comprises:
communicating with the pump type identifier to determine a pump type;
communicating with the pump speed rating identifier to determine a pump speed rating;
cross-checking the determined pump type and the determined pump speed rating; and
inhibiting operation of the pump in dependence on identification of a mismatch between the determined pump type and the determined pump speed rating. The method may comprise enabling operation of the pump in dependence on identification of a match between the determined pump type and the determined pump speed rating.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The scope of the invention is defined by the appended claims.

### BRIEF DESCRIPTION OF THE DRAWINGS

One or more embodiments of the invention will now be described, by way of example only, with reference to the accompanying drawings, in which:
Figure 1 shows a schematic representation of a pump control unit in accordance with an embodiment of the present invention;
Figure 2 shows a schematic representation of the pump control unit comprising a controller;
Figure 3 shows a schematic representation of the controller shown in Figure 2;
Figure 4 shows a circuit diagram of a pump type identification circuit provided in the pump control unit for communicating with the onboard pump type identifier;
Figure 5 shows a circuit diagram of a pump speed rating identification circuit provided in the pump control unit for communicating with the onboard pump speed rating identifier;
Figure 6 shows a circuit diagram of a cross-check circuit provided in the pump control unit for comparing the pump type and pump speed rating;
Figure 7 shows a circuit diagram of an over-speed circuit provided in the pump control unit for identifying pump over-speed;
Figure 8 shows a circuit diagram of an over-speed trip circuit provided in the pump control unit for inhibiting operation of the first pump;
Figure 9 shows a circuit diagram of a latch circuit provided in the pump control unit for inhibiting operation of the first pump;
Figure 10 shows a flow diagram illustrating operation of the pump control unit in accordance with an embodiment of the present invention; and
Figure 11 shows first and second tables representing the state conditions for the pump type identification and the pump speed rating identification.

### DETAILED DESCRIPTION

A pump control unit 1 in accordance with an embodiment of the present invention is described herein with reference to the accompanying Figures. The pump control unit 1 is configured to control a first pump P1 having a pump drive motor 2. The pump control unit 1 and the first pump P1 collectively form a pump system.

The pump control unit 1 in the present embodiment is configured selectively to control operation of a plurality of different pumps Pn. The pumps Pn may be different types (referred to herein as pump types) and/or may have different speed ratings. The different pump types may be variants of the same pump Pn or may be different pumps Pn. The different types of pumps Pn may have different mechanical and/or electrical operating parameters. By way of example, the air-gap flux may vary depending on the type of the pump drive motor 2. The speed rating may, for example, define a full load speed rating for the pump drive motor 2. The different speed ratings may have different mechanical and/or electrical operating parameters. As described herein, the pump control unit 1 is configured to modify the control functions in dependence on the determined pump type and/or speed rating. The pump control unit 1 may also control diagnostic feedback in dependence on the determined pump type and/or speed rating.

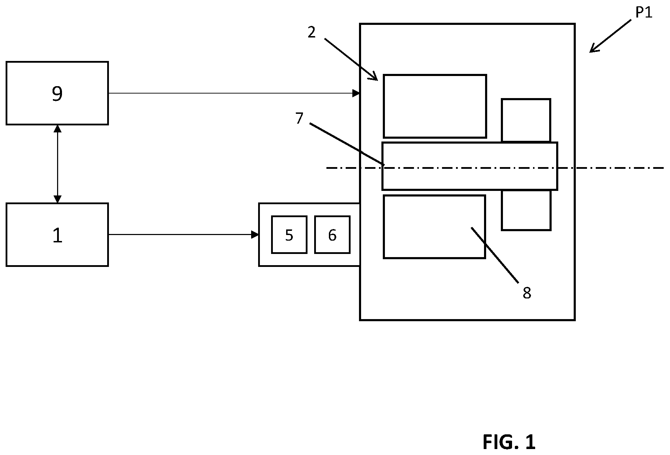

As shown in Figure 1, the pump control unit 1 is described herein with reference to a first pump P1. The first pump P1 is a first pump type and has a first speed rating. The pump control unit 1 is separate from the first pump P1. The pump control unit 1 in the present embodiment is remote from the first pump P1 and provides remote control of the first pump P1. The pump control unit 1 is electrically connected to the first pump P1 by a power and signal loom. The pump control unit 1 is operative to determine the pump type and the pump speed rating of the first pump P1. As described herein, the pump control unit 1 is configured to select an appropriate control strategy for controlling operation of the first pump P1 in dependence on the determined pump type and pump speed rating. The control strategy may be selected from a plurality of predefined control strategies.

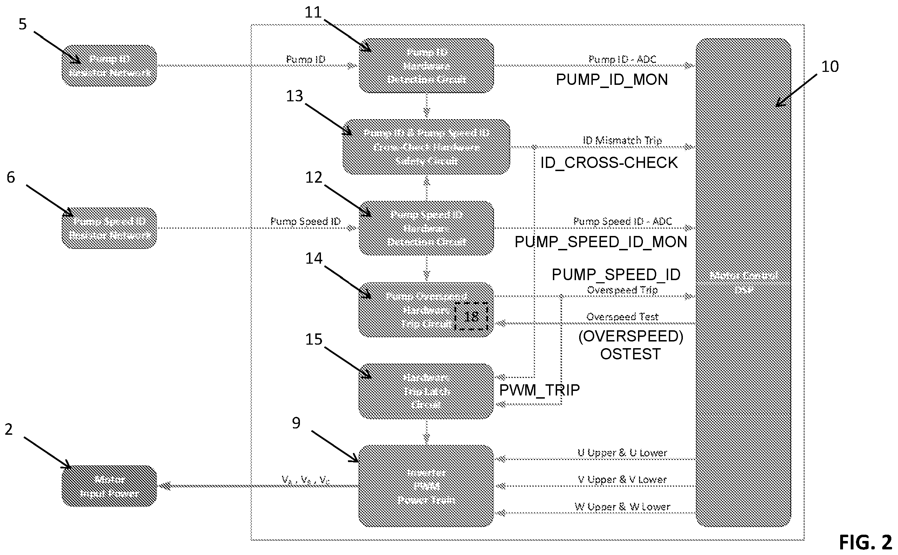

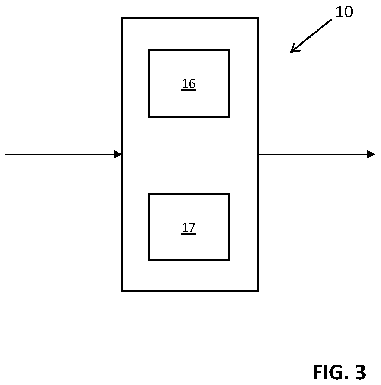

The first pump P1 in the present embodiment is a vacuum pump for establishing a vacuum in an industrial process. In use, the first pump P1 is configured to pump process gases. The first pump P1 may, for example, be a turbo-molecular pump. The first pump P1 comprises a pump drive motor 2; a pump type identifier 5; and a pump speed rating identifier 6. The pump drive motor 2 is a permanent magnet (PM) electric motor. As shown schematically in Figure 1, the pump drive motor 2 comprises a rotor 7 and a stator 8. The pump type identifier 5 and the pump speed rating identifier 6 may be integrated into the first pump P1. A 3-phase alternating current is supplied to the electric motor 2 from an inverter 9. As described herein, the inverter 9 is controlled by the pump control unit 1. A schematic representation of the pump control unit 1 is shown in Figure 2. The pump controller 1 comprises a controller 10, as shown in Figure 3.

The pump type identifier 5 is provided to enable the pump control unit 1 to identify the pump type of the first pump P1. The pump type identifier 5 is implemented in hardware as a circuit. The pump type identifier 5 is configured to enable the pump control unit 1 to differentiate between two or more different pump types. The pump control unit 1 communicates with the pump type identifier 5 to identify the first pump P1 as being of the first pump type. The pump type identifier 5 enables the pump control unit 1 to differentiate between the first pump type and at least one second pump type. The pump type identifier 5 comprises a pump type resistor network TRN1 composed of one or more electrical resistors. The resistors are provided on a printed circuit board located within the first pump P1. The printed circuit board and the passive components are referred to as the Pump Electronics Printed Circuit Assembly (Pump Electronics PCA). The pump type resistor network TRN1 has a predefined pump type resistance which is identifiable. The pump type resistance is predefined and is associated with the first pump type. Each type of pump Pn has a pump type identifier 5 comprising a pump type resistor network TRN1 having an associated pump type resistance. The pump type resistances are predefined and are different for each pump type. The pump type resistor values are chosen to provide sufficient tolerance and range banding, for example to allow for cable lengths up to 200 metres. The pump type resistor values may enable identification of eight (8) or more different pump types. The pump control unit 1 can identify the pump type by measuring a pump identification voltage (PUMP_ID) across the pump type resistor network TRN1 to determine the pump type resistance. By way of example, a second pump P2 of a second type may comprise a second pump type resistor network having a second pump type resistance, the second pump type resistance being different from the first pump type resistance.

The first pump P1 has a first speed rating. The speed rating may, for example, define a full load speed rating of the first pump P1. If the first pump P1 is operated above the rated speed, there is a risk of mechanical failure which may result in a failed vacuum seal. The pump speed rating identifier 6 is provided to enable the pump control unit 1 to identify the speed rating of the first pump P1. The pump speed rating identifier 6 is implemented in hardware as an electrical circuit. The pump speed rating identifier 6 can have the same configuration as the pump type identifier 5. The pump speed rating identifier 6 enables identification of the speed rating of the first pump P1 as one of a plurality of different speed ratings. In particular, the pump type identifier 5 enables the pump control unit 1 to identify the first pump P1 as having the first speed rating. By way of example, different pumps Pn available in a particular range may have different speed ratings. The pump speed rating identifier 6 enables differentiation between the speed rating of the first pump P1 and the speed rating of the other pumps Pn. The pump speed rating identifier 6 comprises a speed rating resistor network SRN1 composed of one or more electrical resistors. The resistors are provided on a printed circuit board located within the first pump P1. The speed rating resistor network SRN1 may be incorporated into the Pump Electronics Printed Circuit Assembly (Pump Electronics PCA). The pump type resistor network TRN1 and the speed rating resistor network SRN1 are independent of each other. The speed rating resistor network SRN1 has a predefined speed rating resistance which is identifiable. The first speed rating resistance is predefined and is associated with the first pump speed rating. Each type of pump Pn has a pump speed rating identifier 6 comprising a speed rating resistor network SRN1 having an associated speed rating resistance. The speed rating resistances are predefined and are different for each speed rating. The speed rating resistor values are chosen to provide sufficient tolerance and range banding, for example to allow for cable lengths up to 200 metres. The pump type resistor values may enable identification of four (4) or more different pump speed ratings. The pump control unit 1 can identify the pump speed rating by measuring a pump speed identification voltage (PUMP_SPEED_ID) voltage across the speed rating resistor network SRN1 to determine the pump type resistance. By way of example, the second pump P2 may comprise a second pump type resistor network having a second speed rating resistance, the second speed rating resistance being different from the first speed rating resistance.

As shown in Figure 2, the pump control unit 1 comprises a controller 10, a pump type identification circuit 11, a pump speed rating identification circuit 12, a cross-check circuit 13, a pump over-speed circuit 14 and a trip latch circuit 15. The controller 10 is configured to control operation of the inverter 9 to control operation of the pump drive motor 2. In particular, the controller 10 is configured to select and implement a control strategy for the pump drive motor 2 in dependence on the determined pump type and pump speed rating. As shown in Figure 3, the controller 10 comprises at least one electronic processor 16 and a system memory 17. A set of computational instructions is stored on the system memory 17. When executed, the computational instructions cause the electronic processor 16 to implement the method(s) described herein. The controller 10 is configured to communicate with the pump type identification circuit 11, the pump speed rating identification circuit 12, the cross-check circuit 13 and the pump over-speed circuit 14. The pump type identification circuit 11 and the pump speed rating identification circuit 12 are implemented in hardware as separate circuits. The operation of the pump control unit 1 will now be described in more detail with reference to the accompanying figures.

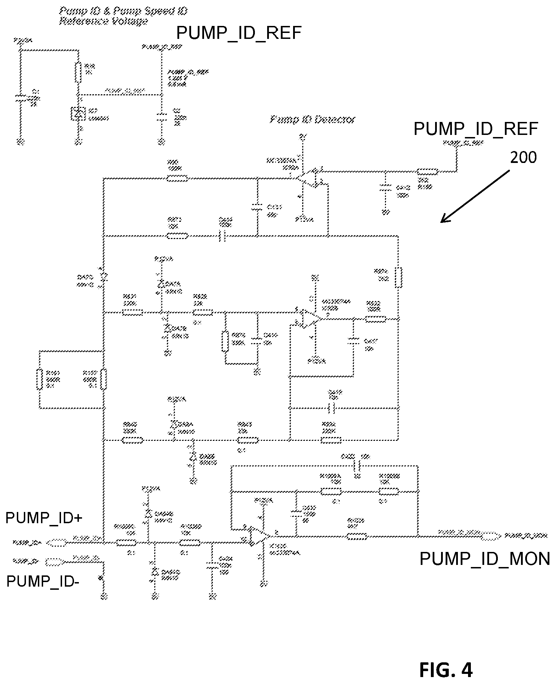

The pump type identification circuit 11 is configured to communicate with the pump type identifier 5 to identify the pump type. The pump type identification circuit 11 is implemented in hardware. A second circuit diagram 200 representing the pump type identification circuit 11 is shown in Figure 4. The pump type identification circuit 11 is configured to output a pump type identification signal to the pump type identifier 5. The pump type identification signal comprises a predetermined electrical current generated by a current source. The pump type identification signal is injected into pump type resistor network TRN1 provided in the pump type identifier 5. The measured voltage across the pump type resistor network TRN1 is used to determine the pump type resistance of the pump type resistor network TRN1. The pump type resistance is unique to each pump type. The pump type identification circuit 11 may thereby identify the pump type in dependence on the measured voltage. The pump type identification circuit 11 outputs a pump type identification signal (PUMP_ID_MON) for identifying the pump type. The pump type identification signal (PUMP_ID_MON) in the present embodiment indicates the voltage measured across the pump type resistor network TRN1. The pump type identification signal (PUMP_ID_MON) is output to the controller 10 and to the cross-check circuit 13. In the present embodiment, the pump type identification circuit 11 identifies the first pump P1 as being a first pump type.

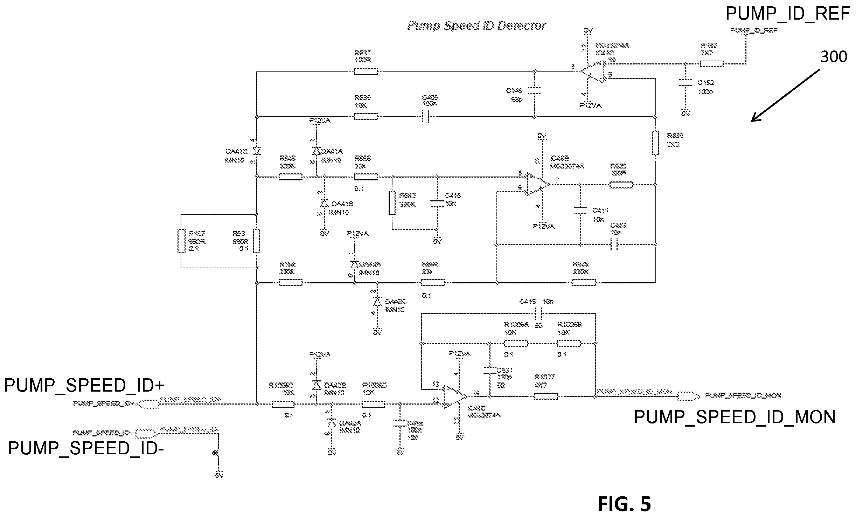

The pump speed rating identification circuit 12 is configured to communicate with the pump speed rating identifier 6 to identify the pump speed rating. The pump speed rating identification circuit 12 is implemented in hardware. A third circuit diagram 300 representing the pump speed rating identification circuit 12 is shown in Figure 5. The pump speed rating identification circuit 12 is configured to output a pump speed rating identification signal to the pump speed rating identifier 6. The pump speed rating identification signal comprises a predetermined electrical current generated by a current source. The pump speed rating identification signal is injected into pump speed rating resistor network SRN1 provided in the pump speed rating identifier 6. The measured voltage across the pump speed rating resistor network SRN1 is used to determine the pump speed rating resistance of the pump speed rating resistor network SRN1. The pump speed rating resistance is unique to each pump speed rating. The pump speed rating identification circuit 12 may thereby identify the pump speed rating in dependence on the measured voltage. The pump speed rating identification circuit 12 outputs a pump speed rating identification signal (PUMP_SPEED_ID_MON) for identifying the pump speed rating. The pump speed rating identification signal (PUMP_SPEED_ID_MON) in the present embodiment indicates the voltage measured across the pump speed rating resistor network SRN1. The pump speed rating identification signal (PUMP_SPEED_ID_MON) is output to the controller 10 and to the cross-check circuit 13. In the present embodiment, the pump speed rating identification circuit 12 identifies the first pump P1 as having a first pump speed rating.

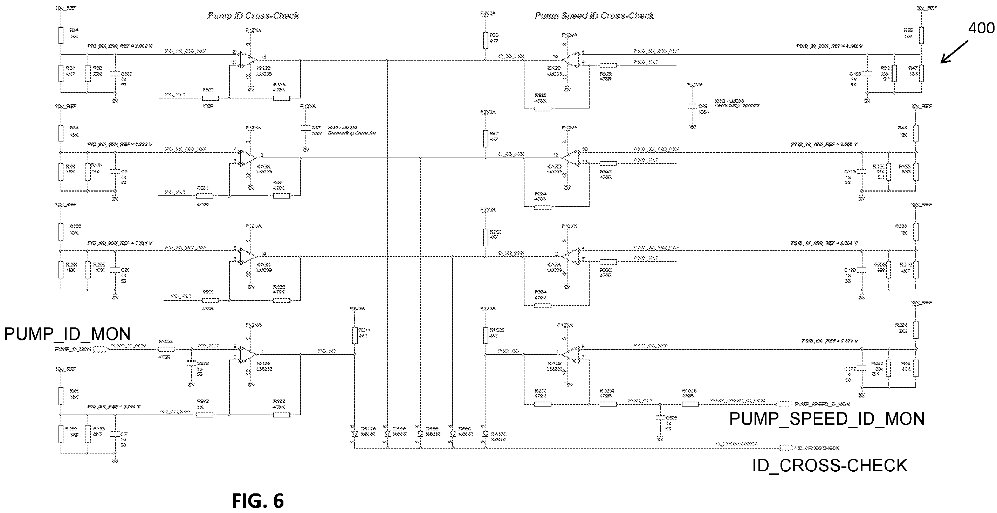

The cross-check circuit 13 is configured to determine if there is a valid match between the pump type (as identified by the pump type identification circuit 11) and the pump speed (as identified by the pump speed rating identification circuit 12). The cross-check circuit 13 is implemented in hardware. A fourth circuit diagram 400 representing the cross-check circuit 13 is shown in Figure 6. The cross-check circuit 13 receives the pump type identification signal (PUMP_ID_MON) from the pump type identification circuit 11; and the pump speed rating identification signal (PUMP_SPEED_ID_MON) from the pump speed rating identification circuit 12. The cross-check circuit 13 compares the pump type identification signal (PUMP_ID_MON) and the pump speed rating identification signal (PUMP_SPEED_ID_MON) to determine if there is a match between the pump type (as identified by the pump type identification circuit 11) and the pump speed (as identified by the pump speed rating identification circuit 12). The cross-check circuit 13 uses window comparators to implement a hardware check to identify a match or a mismatch. The measured pump identification voltage is used by the cross-check circuit 13, along with the pump speed identification voltage, to determine if the first pump P1 is correctly identified. This analysis is performed prior to operation of the first pump P1 to help ensure safe operation. Both the pump identification and pump speed identification voltages must match, or fall within, a defined range prior to and during operation of the first pump P1. If the cross-check circuit 13 determines that there is a match between the identified pump type and the pump speed rating, a match signal is output to the controller 10. If the cross-check circuit 13 determines that there is a mismatch between the identified pump type and the pump speed rating, a mismatch signal is output to the controller 10. The cross-check circuit 13 is configured to output a mismatch signal (ID_CROSS-CHECK) to inhibit operation of the pump P1 in dependence on identification of a mismatch. The mismatch signal (ID_CROSS-CHECK) is output to the controller 10 and the trip latch circuit 15. Only a valid match prior to and during operation will result in power being supplied to the first pump P1. If the cross-check circuit 13 determines that the identified pump type and pump speed rating are not a valid match, the trip latch circuit 15 controls the inverter 9 to inhibit the supply of power to the pump drive motor 2.

The pump type identification signal (PUMP_ID_MON) and the pump speed rating identification signal (PUMP_SPEED_ID_MON) are output to the controller 10. The at least one processor 16 is configured to control operation of the first pump P1 in dependence on the pump type identification signal (PUMP_ID_MON) and the pump speed rating identification signal (PUMP_SPEED_ID_MON). The at least one processor 16 may, for example, provide functional performance and/or diagnostic feedback in dependence on the pump type identified by the pump type identification signal (PUMP_ID_MON). The functional performance may, for example, define one or more parameters for estimating the air-gap flux in the pump drive motor 2. The functional performance and/or diagnostic feedback can be matched to the identified pump type. Different functional performance and/or diagnostic feedback may be provided for different pump types. The controller 10 may control an operating speed of the first pump P1 in dependence on the speed rating identified by the pump speed rating identification signal (PUMP_SPEED_ID_MON). For example, the controller 10 may define an upper speed threshold in dependence on the identified pump speed rating. The controller 10 may optionally be configured to implement a secondary check using embedded firmware to identify a match or a mismatch between the pump type identified by the pump type identification signal (PUMP_ID_MON) and the pump speed rating identified by the pump speed rating identification signal (PUMP_SPEED_ID_MON). The controller 10 may control the inverter 9 to inhibit the supply of power to the pump drive motor 2 if the secondary check identifies a mismatch. At least in certain embodiments, the operation of the first pump P1 may be inhibited unless both the controller 10 and the cross-check circuit 13 a valid match between the pump type and the pump speed rating match.

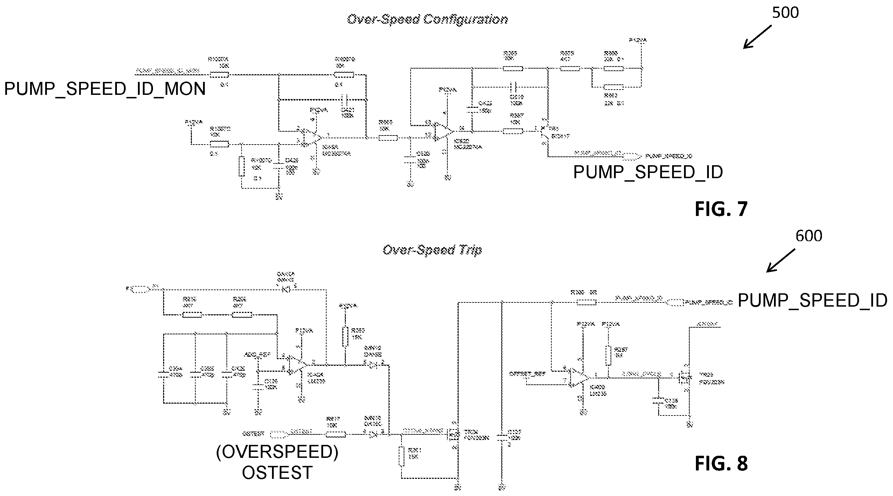

The pump speed rating identification signal (PUMP_SPEED_ID_MON) is output to the pump over-speed circuit 14. The pump over-speed circuit 14 is implemented in hardware. A fifth circuit diagram 500 representing the pump over-speed circuit 14 is shown in Figure 7. The pump speed rating is used to configure the over-speed circuit 14 to control the operating speed of the first pump P1. The voltage measured across the pump speed rating resistor network SRN1 is used to configure a pump over-speed trip circuit 18. The pump over-speed trip circuit 18 is implemented in hardware. A sixth circuit diagram 600 representing the pump over-speed trip circuit 18 is shown in Figure 8. The voltage measured across the pump speed rating resistor network SRN1 is used to configure a dedicated current source which sets an interval timer of the pump over-speed circuit 14. The pump over-speed circuit 14 and the pump over-speed trip circuit 18 are implemented as separate circuits in the present embodiment. In a variant, pump over-speed circuit 14 and the pump over-speed trip circuit 18 may be combined with each other.

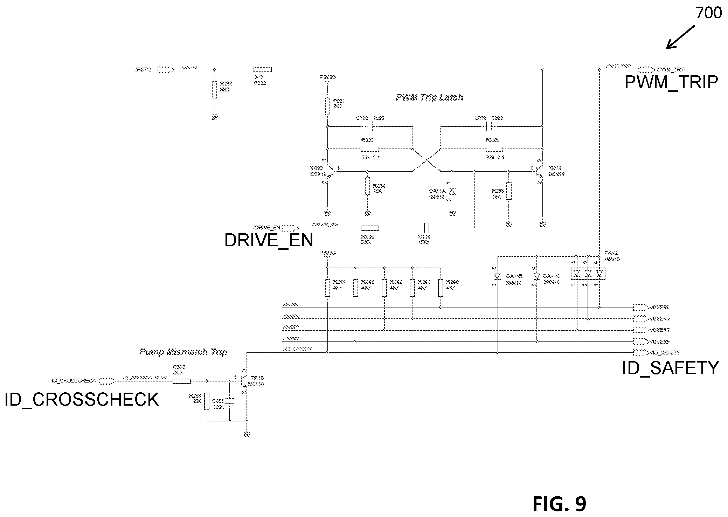

The trip latch circuit 15 is implemented in hardware. A seventh circuit diagram 700 representing the trip latch circuit 15 is shown in Figure 9. The trip latch circuit 15 is configured to inhibit operation of the first pump P1 in dependence on identification of a mismatch, either by the controller 10 or the cross-check circuit 13.

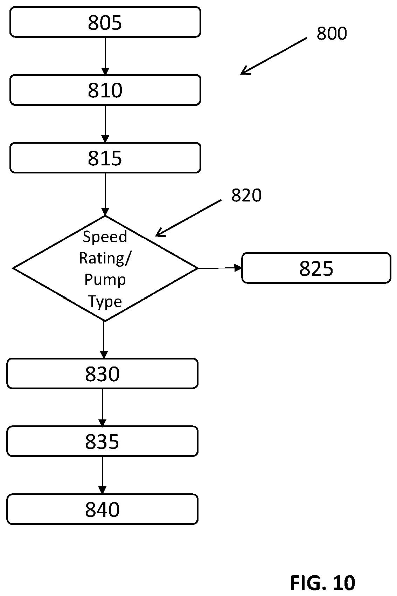

The operation of the pump control unit 1 will now be described with reference to the flow diagram 800 shown in Figure 10. The pump control unit 1 is connected to the first pump P1 using an electrical power and signal loom (BLOCK 805). The pump type identification circuit 11 and the pump speed rating identification circuit 12 are provided on-board the first pump P1. The pump control unit 1 determines the pump type by interrogating the pump type identification circuit 11 (BLOCK 810). The pump control unit 1 determines the pump speed rating of the first pump P1 by interrogating the pump speed rating identification circuit 12 (BLOCK 815). The cross-check circuit 15 compares the determined pump type and the pump speed rating to determine if there is a valid match or a mismatch (i.e., an invalid match) (BLOCK 820). If the cross-check circuit 15 determines that there is a mismatch, the operation of the first pump P1 is inhibited (BLOCK 825). In the present embodiment, the trip latch circuit 15 is operative to inhibit operation of the first pump P1. The pump control unit 1 may optionally output a mismatch signal to alert an operator to the mismatch between the pump type and the pump speed rating. If the cross-check circuit 15 determines that there is a valid match, the operation of the first pump P1 is enabled (BLOCK 830). The pump control unit 1 controls the first pump P1 in dependence on the determined pump speed rating. For example, the pump control unit 1 may limit the operating speed of the first pump P1 consistent with the pump speed rating (BLOCK 835). The operation of the first pump P1 is terminated in conventional manner (BLOCK 840).

At least in certain embodiments, the pump control unit 1 can be used to safely to control a plurality of different pumps Pn. The pumps Pn each comprise an on-board pump type identification circuit 11 and an on-board pump speed rating identification circuit 12. The pump control unit 1 injects a predetermined current into the pump type identification circuit 11 and the pump speed rating identification circuit 12. The measured voltage indicates the pump type and the pump speed rating of the pump Pn. The pump control unit 1 utilises the cross-check circuit 15 to ensure that the pump type and the pump speed rating match. If the pump type and the pump speed rating are not a valid match, the cross-check circuit 15 outputs a mismatch signal. The trip latch circuit 15 is configured to inhibit operation of the pump Pn in dependence on receipt of the mismatch signal. By comparing the pump type and the pump speed rating, the pump control unit 1 implements additional checks to help ensure accurate identification of the pump Pn. The pump control unit 1 provides hardware redundancy, which is a key feature in achieving high reliability for functional safety. The system using two independent identification circuits, namely: the pump type identification circuit 11 and the pump speed rating identification circuit 12. If either of these circuits detect the wrong pump type or speed type, the pump control unit 1 will disable the output power from the pump control unit 1 to the pump Pn. Furthermore, each detection circuit has been designed to capture both short-circuit and open-circuit conditions. At least in certain embodiments, this may provide an additional level of protection. The pump control unit 1 implements an appropriate control strategy in dependence on the identified pump Pn. For example, the pump control unit 1 may select one of a plurality of predefined control strategies in dependence on the identified pump Pn.

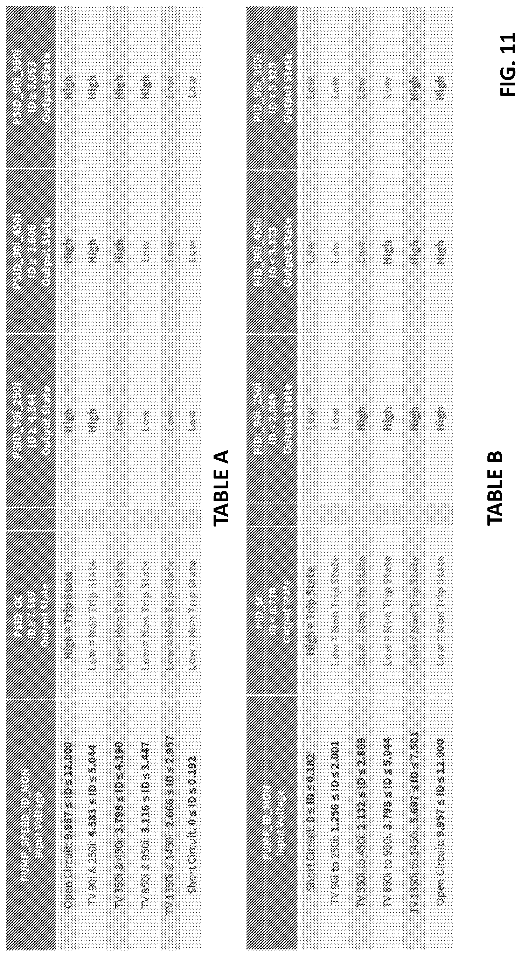

A first table (TABLE A) and a second table (TABLE B) are shown in Figure 11. The first table 25 represents the state conditions for the pump speed rating identification signal; and the second table 30 represents the state conditions for the pump type identification signal used by the cross-check circuit 15. When combined, these state conditions must result in LOW output signal to indicate a valid match condition. If the output signal remain HIGH: then a mismatch condition; short-circuit condition or open-circuit condition has been detected.

It will be appreciated that various changes and modifications can be made to the present invention without departing from the scope of the present application. The scope of the invention is defined by the appended claims.

| **Reference** | **Component** |
|---|---|
| 1 | Pump Control Unit |
| 2 | Pump Drive Motor |
| 5 | Pump Type Identifier |
| 6 | Pump Speed Rating Identifier |
| 7 | Rotor |
| 8 | Stator |
| 9 | Inverter |
| 10 | Controller |
| 11 | Pump Type Identification Circuit |
| 12 | Pump Speed Rating Identification Circuit |
| 13 | Cross-Check circuit |
| 14 | Pump Over-Speed Circuit 14 |
| 15 | Trip Latch Circuit |
| 16 | Electronic Processor |
| 17 | System Memory |
| 18 | Over-Speed Trip Circuit |
| P1 | First Pump |
| SRN1 | Pump Speed Rating Resistor Network |
| TRN1 | Pump Type Resistor Network |

| **BLOCK** | **LABEL** |
|---|---|
| 805 | Pump control unit connected to the first pump |
| 810 | Determine pump type of the first pump |
| 815 | Determine pump speed rating |
| 820 | Identify valid or invalid match |
| 825 | Invalid match: inhibit pump operation |
| 830 | Valid match: enable pump operation |
| 835 | Control operating speed in dependence on determined pump speed rating |
| 840 | Shut down |

## Claims

1. A pump control unit (1) for controlling a pump (P1), the pump (P1) comprising a pump drive motor (2), a pump type identifier (5) for identifying a pump type, and a pump speed rating identifier (6) for identifying a pump speed rating; wherein the pump control unit (1) comprises:
at least one controller (10) configured to control an inverter for powering the pump drive motor (2);
a pump type identification circuit (11) configured to communicate with the pump type identifier (5) to identify the pump type, the pump type identification circuit (11) being configured to output a pump type identification signal (PUMP_ID_MON) for identifying the pump type;
a pump speed rating identification circuit (12) configured to communicate with the pump speed rating identifier (6) to identify the pump speed rating, the pump speed rating identification circuit (12) being configured to output a pump speed rating identification signal (PUMP_SPEED_ID_MON) for identifying the pump speed rating; and
a cross-check circuit (13) for receiving the pump type identification signal (PUMP_ID_MON) and the pump speed rating identification signal (PUMP_SPEED_ID_MON) and identifying a mismatch between the identified pump type and the identified pump speed rating;
wherein the cross-check circuit (13) is configured to output a mismatch signal (ID_CROSS-CHECK) to inhibit operation of the pump in dependence on identification of the mismatch.

2. A pump control unit (1) as claimed in claim 1, wherein the cross-check circuit (13) is configured to output the mismatch signal (ID_CROSS-CHECK) to a trip latch circuit for inhibiting operation of the pump.

3. A pump control unit (1) as claimed in claim 1 or claim 2, wherein the pump type identification circuit (11) is configured to output a first current to the pump type identification circuit (11) and to measure a pump type identification voltage, the pump type identification circuit (11) being configured to identify the pump type in dependence on the measured pump type identification voltage.

4. A pump control unit (1) as claimed in any one of claims 1, 2 or 3, wherein the pump speed rating identification circuit (12) is configured to output a second current to the pump speed rating identification circuit (12) and to measure a pump speed rating identification voltage, the pump speed rating identification circuit (12) being configured to identify the pump speed rating in dependence on the measured pump speed rating identification voltage.

5. A pump control unit (1) as claimed in claims 3 and 4, wherein the cross-check circuit (13) is configured to identify the mismatch in dependence on a determination that the relationship between the measured pump type identification voltage and the measured pump speed rating identification voltage is outside a predetermined range.

6. A pump control unit (1) as claimed in any one of the preceding claims, wherein the at least one controller (10) is configured to receive the pump type identification signal (PUMP_ID_MON) and the pump speed rating identification signal (PUMP_SPEED_ID_MON).

7. A pump control unit (1) as claimed in claim 6, wherein the at least one controller (10) is configured to perform a secondary check to identify a mismatch between the identified pump type and the identified pump speed rating in dependence on the pump type identification signal (PUMP_ID_MON) and the pump speed rating identification signal (PUMP_SPEED_ID_MON).

8. A pump control unit (1) as claimed in 7, wherein the at least one controller (10) is configured to inhibit operation of the pump in dependence on identification of the mismatch.

9. A pump control unit (1) as claimed in any one of claims 6, 7 or 8, wherein the at least one controller (10) is configured to control an operating speed of the pump in dependence on the identified pump speed rating.

10. A pump control unit (1) as claimed in any one of the preceding claims comprising an over-speed detection unit, the over-speed detection unit being configured in dependence on the pump speed rating identification signal (PUMP_SPEED_ID_MON).

11. A pump system comprising pump control unit (1) as claimed in any one of the preceding claims, and a pump apparatus (P1).

12. A pump apparatus (P1) comprising:
a pump drive motor (2);
a pump type identifier (5) for identifying a pump type; and
a pump speed rating identifier (6) for identifying a pump speed rating;
wherein the pump type identifier (5) and the pump speed rating identifier (6) are operable independently of each other to identify the pump type and the pump speed rating respectively.

13. A pump apparatus (P1) as claimed in claim 12, wherein the pump type identifier (5) comprises a pump type resistor network for establishing a pump type identification voltage in dependence on the supply of a first current.

14. A pump apparatus (P1) as claimed in claim 12 or claim 13, wherein the pump speed rating identifier (6) comprises a speed rating resistor network for establishing a pump speed rating identification voltage in dependence on the supply of a second current.

15. A method of controlling a pump (P1) comprising a pump drive motor (2), a pump type identifier (5) and a pump speed rating identifier (6); wherein the method comprises:
communicating with the pump type identifier (5) to determine a pump type;
communicating with the pump speed rating identifier (6) to determine a pump speed rating;
cross-checking the determined pump type and the determined pump speed rating; and
inhibiting operation of the pump (P1) in dependence on identification of a mismatch between the determined pump type and the determined pump speed rating.

## Patentansprüche

1. Pumpensteuerungseinheit (1) zum Steuern einer Pumpe (P1), wobei die Pumpe (P1) einen Pumpenantriebsmotor (2), einen Pumpentypidentifikator (5) zum Identifizieren eines Pumpentyps und einen Pumpennenngeschwindigkeitsidentifikator (6) zum Identifizieren einer Pumpennenngeschwindigkeit umfasst; wobei die Pumpensteuerungseinheit (1) Folgendes umfasst:
mindestens eine Steuerung (10), dazu konfiguriert, einen Wechselrichter zum Versorgen des Pumpenantriebsmotors (2) mit Energie zu steuern;
eine Pumpentypidentifikationsschaltung (11), dazu konfiguriert, mit dem Pumpentypidentifikator (5) zu kommunizieren, um den Pumpentyp zu identifizieren, wobei die Pumpentypidentifikationsschaltung (11) dazu konfiguriert ist, ein Pumpentypidentifikationssignal (PUMP_ID_MON) zum Identifizieren des Pumpentyps auszugeben;
eine Pumpennenngeschwindigkeitsidentifikationsschaltung (12), dazu konfiguriert, mit dem Pumpennenngeschwindigkeitsidentifikator (6) zu kommunizieren, um die Pumpennenngeschwindigkeit zu identifizieren, wobei die Pumpennenngeschwindigkeitsidentifikationsschaltung (12) dazu konfiguriert ist, ein Pumpennenngeschwindigkeitsidentifikationssignal (PUMP_SPEED_ID_MON) zum Identifizieren der Pumpennenngeschwindigkeit auszugeben; und
eine Quervergleichsschaltung (13) zum Empfangen des Pumpentypidentifikationssignals (PUMP_ID_MON) und des Pumpennenngeschwindigkeitsidentifikationssignals (PUMP_SPEED_ID_MON) und Identifizieren einer Abweichung zwischen dem identifizierten Pumpentyp und der identifizierten Pumpennenngeschwindigkeit;
wobei die Quervergleichsschaltung (13) dazu konfiguriert ist, ein Abweichungssignal (ID_CROSS-CHECK) auszugeben, um in Abhängigkeit von der Identifikation der Abweichung einen Betrieb der Pumpe zu verhindern.

2. Pumpensteuerungseinheit (1) nach Anspruch 1, wobei die Quervergleichsschaltung (13) dazu konfiguriert ist, zum Verhindern des Betriebs der Pumpe das Abweichungssignal (ID_CROSS-CHECK) an eine Abschaltsperrschaltung auszugeben.

3. Pumpensteuerungseinheit (1) nach Anspruch 1 oder Anspruch 2, wobei die Pumpentypidentifikationsschaltung (11) dazu konfiguriert ist, an die Pumpentypidentifikationsschaltung (11) einen ersten Strom auszugeben und eine Pumpentypidentifikationsspannung zu messen, wobei die Pumpentypidentifikationsschaltung (11) dazu konfiguriert ist, den Pumpentyp in Abhängigkeit von der gemessenen Pumpentypidentifikationsspannung zu messen.

4. Pumpensteuerungseinheit (1) nach einem der Ansprüche 1, 2 oder 3, wobei die Pumpennenngeschwindigkeitsidentifikationsschaltung (12) dazu konfiguriert ist, an die Pumpennenngeschwindigkeitsidentifikationsschaltung (12) einen zweiten Strom auszugeben und eine Pumpennenngeschwindigkeitsidentifikationsspannung zu messen, wobei die Pumpennenngeschwindigkeitsidentifikationsschaltung (12) dazu konfiguriert ist, die Pumpennenngeschwindigkeit in Abhängigkeit von der gemessenen Pumpennenngeschwindigkeitsidentifikationsspannung zu messen.

5. Pumpensteuerungseinheit (1) nach den Ansprüchen 3 und 4, wobei die Quervergleichsschaltung (13) dazu konfiguriert ist, die Abweichung in Abhängigkeit von der Feststellung, dass das Verhältnis zwischen der gemessenen Pumpentypidentifikationsspannung und der gemessenen Pumpennenngeschwindigkeitsidentifikationsspannung außerhalb eines vorbestimmten Bereichs liegt, zu identifizieren.

6. Pumpensteuerungseinheit (1) nach einem der vorhergehenden Ansprüche, wobei die mindestens eine Steuerung (10) dazu konfiguriert ist, das Pumpentypidentifikationssignal (PUMP_ID_MON) und das Pumpennenngeschwindigkeitsidentifikationssignal (PUMP_SPEED_ID_MON) zu empfangen.

7. Pumpensteuerungseinheit (1) nach Anspruch 6, wobei die mindestens eine Steuerung (10) dazu konfiguriert ist, eine sekundäre Prüfung zur Identifikation einer Abweichung zwischen dem identifizierten Pumpentyp und der identifizierten Pumpennenngeschwindigkeit in Abhängigkeit vom Pumpentypidentifikationssignal (PUMP_ID_MON) und dem Pumpennenngeschwindigkeitsidentifikationssignal (PUMP_SPEED_ID_MON) durchzuführen.

8. Pumpensteuerungseinheit (1) nach Anspruch 7, wobei die mindestens eine Steuerung (10) dazu konfiguriert ist, in Abhängigkeit von der Identifikation der Abweichung den Betrieb der Pumpe zu verhindern.

9. Pumpensteuerungseinheit (1) nach einem der Ansprüche 6, 7 oder 8, wobei die mindestens eine Steuerung (10) dazu konfiguriert ist, die Drehzahl der Pumpe in Abhängigkeit von der identifizierten Pumpennenngeschwindigkeit zu steuern.

10. Pumpensteuerungseinheit (1) nach einem der vorhergehenden Ansprüche, umfassend eine Übergeschwindigkeitserkennungseinheit, wobei die Übergeschwindigkeitserkennungseinheit in Abhängigkeit von dem Pumpennenngeschwindigkeitsidentifikationssignal (PUMP_SPEED_ID_MON) konfiguriert ist.

11. Pumpensystem, umfassend eine Pumpensteuerungseinheit (1) nach einem der vorhergehenden Ansprüche und eine Pumpenvorrichtung (P1).

12. Pumpenvorrichtung (P1), umfassend:
einen Pumpenantriebsmotor (2);
einen Pumpentypidentifikator (5) zum Identifizieren eines Pumpentyps; und
einen Pumpennenngeschwindigkeitsidentifikator (6) zum Identifizieren einer Pumpennenngeschwindigkeit;
wobei der Pumpentypidentifikator (5) und der Pumpennenngeschwindigkeitsidentifikator (6) unabhängig voneinander betreibbar sind, um den Pumpentyp beziehungsweise die Pumpennenngeschwindigkeit zu identifizieren.

13. Pumpenvorrichtung (P1) nach Anspruch 12, wobei der Pumpentypidentifikator (5) ein Pumpentypwiderstandsnetzwerk zum Festlegen einer Pumpentypidentifikationsspannung in Abhängigkeit vom Zuführen eines ersten Stroms umfasst.

14. Pumpenvorrichtung (P1) nach Anspruch 12 oder Anspruch 13, wobei der Pumpennenngeschwindigkeitsidentifikator (6) ein Nenngeschwindigkeitswiderstandsnetzwerk zum Festlegen einer Pumpennenngeschwindigkeitsidentifikationsspannung in Abhängigkeit vom Zuführen eines zweiten Stroms umfasst.

15. Verfahren zum Steuern einer Pumpe (P1), umfassend einen Pumpenantriebsmotor (2), einen Pumpentypidentifikator (5) und einen Pumpennenngeschwindigkeitsidentifikator (6); wobei das Verfahren Folgendes umfasst:
Kommunizieren mit dem Pumpentypidentifikator (5) zum Bestimmen eines Pumpentyps;
Kommunizieren mit dem Pumpennenngeschwindigkeitsidentifikator (6) zum Bestimmen einer Pumpennenngeschwindigkeit;
Durchführen eines Quervergleichs zwischen dem bestimmten Pumpentyp und der bestimmten Pumpennenngeschwindigkeit; und
Verhindern des Betriebs der Pumpe (P1) in Abhängigkeit von der Identifikation einer Abweichung zwischen dem bestimmten Pumpentyp und der bestimmten Pumpennenngeschwindigkeit.

## Revendications

1. Unité de commande de pompe (1) pour commander une pompe (P1), la pompe (P1) comprenant un moteur d'entraînement de pompe (2), un identificateur de type de pompe (5) pour identifier un type de pompe, et un identificateur d'indice de vitesse de pompe (6) pour identifier un indice de vitesse de pompe ; dans laquelle l'unité de commande de pompe (1) comprend :
au moins un dispositif de commande (10) configuré pour commander un onduleur pour alimenter en énergie le moteur d'entraînement de pompe (2) ;
un circuit d'identification de type de pompe (11) configuré pour communiquer avec l'identificateur de type de pompe (5) pour identifier le type de pompe, le circuit d'identification de type de pompe (11) étant configuré pour délivrer en sortie un signal d'identification de type de pompe (PUMP_ID_MON) pour identifier le type de pompe ;
un circuit d'identification d'indice de vitesse de pompe (12) configuré pour communiquer avec l'identificateur d'indice de vitesse de pompe (6) pour identifier l'indice de vitesse de pompe, le circuit d'identification d'indice de vitesse de pompe (12) étant configuré pour délivrer en sortie un signal d'identification d'indice de vitesse de pompe (PUMP_SPEED_ID_MON) pour identifier l'indice de vitesse de pompe ; et
un circuit de vérification croisée (13) pour recevoir le signal d'identification de type de pompe (PUMP_ID_MON) et le signal d'identification d'indice de vitesse de pompe (PUMP_SPEED_ID_MON) et identifier une discordance entre le type de pompe identifié et l'indice de vitesse de pompe identifié ;
dans laquelle le circuit de vérification croisée (13) est configuré pour délivrer en sortie un signal de discordance (ID_CROSS-CHECK) afin d'inhiber le fonctionnement de la pompe en fonction de l'identification de la discordance.

2. Unité de commande de pompe (1) selon la revendication 1, dans laquelle le circuit de vérification croisée (13) est configuré pour délivrer en sortie le signal de discordance (ID_CROSS-CHECK) vers un circuit de blocage de déclenchement pour inhiber le fonctionnement de la pompe.

3. Unité de commande de pompe (1) selon la revendication 1 ou la revendication 2, dans laquelle le circuit d'identification de type de pompe (11) est configuré pour délivrer en sortie un premier courant vers le circuit d'identification de type de pompe (11) et pour mesurer une tension d'identification de type de pompe, le circuit d'identification de type de pompe (11) étant configuré pour identifier le type de pompe en fonction de la tension d'identification de type de pompe mesurée.

4. Unité de commande de pompe (1) selon l'une quelconque des revendications 1, 2 ou 3, dans laquelle le circuit d'identification d'indice de vitesse de pompe (12) est configuré pour délivrer en sortie un second courant vers le circuit d'identification d'indice de vitesse de pompe (12) et pour mesurer une tension d'identification d'indice de vitesse de pompe, le circuit d'identification d'indice de vitesse de pompe (12) étant configuré pour identifier l'indice de vitesse de pompe en fonction de la tension d'identification d'indice de vitesse de pompe mesurée.

5. Unité de commande de pompe (1) selon les revendications 3 et 4, dans laquelle le circuit de vérification croisée (13) est configuré pour identifier la discordance en fonction d'une détermination que la relation entre la tension d'identification de type de pompe mesurée et la tension d'identification d'indice de vitesse de pompe mesurée est en dehors d'une plage prédéterminée.

6. Unité de commande de pompe (1) selon l'une quelconque des revendications précédentes, dans laquelle ledit au moins un dispositif de commande (10) est configuré pour recevoir le signal d'identification de type de pompe (PUMP_ID_MON) et le signal d'identification d'indice de vitesse de pompe (PUMP_SPEED_ID_MON).

7. Unité de commande de pompe (1) selon la revendication 6, dans laquelle ledit au moins un dispositif de commande (10) est configuré pour effectuer une vérification secondaire pour identifier une discordance entre le type de pompe identifié et l'indice de vitesse de pompe identifié en fonction du signal d'identification de type de pompe (PUMP_ID_MON) et du signal d'identification d'indice de vitesse de pompe (PUMP_SPEED_ID_MON).

8. Unité de commande de pompe (1) selon la revendication 7, dans laquelle ledit au moins un dispositif de commande (10) est configuré pour inhiber le fonctionnement de la pompe en fonction de l'identification de la discordance.

9. Unité de commande de pompe (1) selon l'une quelconque des revendications 6, 7 ou 8, dans laquelle ledit au moins un dispositif de commande (10) est configuré pour commander une vitesse de fonctionnement de la pompe en fonction de l'indice de vitesse de pompe identifié.

10. Unité de commande de pompe (1) selon l'une quelconque des revendications précédentes, comprenant une unité de détection de sur-vitesse, l'unité de détection de sur-vitesse étant configurée en fonction du signal d'identification d'indice de vitesse de pompe (PUMP_SPEED_ID_MON).

11. Système de pompe comprenant une unité de commande de pompe (1) selon l'une quelconque des revendications précédentes, et un appareil de pompe (P1).

12. Appareil de pompe (P1) comprenant :
un moteur d'entraînement de pompe (2) ;
un identificateur de type de pompe (5) pour identifier un type de pompe ; et
un identificateur d'indice de vitesse de pompe (6) pour identifier un indice de vitesse de pompe ;
dans lequel l'identificateur de type de pompe (5) et l'identificateur d'indice de vitesse de pompe (6) sont opérationnels indépendamment l'un de l'autre pour identifier respectivement le type de pompe et l'indice de vitesse de pompe.

13. Appareil de pompe (P1) selon la revendication 12, dans lequel l'identificateur de type de pompe (5) comprend un réseau de résistances de type de pompe pour établir une tension d'identification de type de pompe en fonction de l'alimentation d'un premier courant.

14. Appareil de pompe (P1) selon la revendication 12 ou la revendication 13, dans lequel l'identificateur d'indice de vitesse de pompe (6) comprend un réseau de résistances d'indice de vitesse de pompe pour établir une tension d'identification d'indice de vitesse de pompe en fonction de l'alimentation d'un second courant.

15. Procédé de commande d'une pompe (P1) comprenant un moteur d'entraînement de pompe (2), un identificateur de type de pompe (5) et un identificateur d'indice de vitesse de pompe (6) ; dans lequel le procédé comprend :
la communication avec l'identificateur de type de pompe (5) pour déterminer un type de pompe ;
la communication avec l'identificateur d'indice de vitesse de pompe (6) pour déterminer un indice de vitesse de pompe ;
la vérification croisée du type de pompe déterminé et de l'indice de vitesse de pompe déterminé ; et
l'inhibition du fonctionnement de la pompe (P1) en fonction de l'identification d'une discordance entre le type de pompe déterminé et l'indice de vitesse de pompe déterminé.
